# EUROPÄISCHE PATENTSCHRIFT

(11) **EP 0 913 109 B1**
(45) Veröffentlichungstag und Bekanntmachung des Hinweises auf die Patenterteilung: **22.01.2003**
(21) Anmeldenummer: 98113929.8
(22) Anmeldetag: 24.07.1998
(51) Int. Cl.: A47B 95/02, F16B 12/14, F16B 12/04

(54) **Befestigungsvorrichtung für Möbelgriffe und dergleichen**
Device for fastening a handle or the like to a piece of furniture
Dispositif de fixation d'une poignée de meuble ou similaire

(30) Priorität: 03.10.1997 DE 19743809
(43) Veröffentlichungstag der Anmeldung: 06.05.1999
(73) Patentinhaber: ALNO Aktiengesellschaft, 88630 Pfullendorf (DE)
(72) Erfinder: Schmucker, Erwin, 88630 Pfullendorf (DE); Wahl, Willi, 88518 Herbertingen (DE)
(74) Vertreter: Patentanwälte Eisele, Otten, Roth & Dobler

(56) Entgegenhaltungen:
- US-A- 2 095 397
- US-A- 4 413 374
- US-A- 5 255 413

## Beschreibung

Die Erfindung betrifft eine Befestigungsvorrichtung für Möbelgriffe und dergleichen nach dem Gattungsbegriff des Patentanspruchs 1. Ihr Einsatzgebiet sind insbesondere Schrank- und Schubladengriffe bzw. -knöpfe, die mittels einer das Schranktürblatt oder die Schubladenfrontplatte durchsetzenden Schraube befestigt werden.

Das Grundproblem besteht darin, daß die Dicke der Frontplatten bei den verschiedenen Möbelmodellen stark unterschiedlich ist und deshalb Schrauben unterschiedlicher Länge verfügbar gehalten werden müssen. Das gilt sowohl für einfache Holzgriffe, die mit Holzschrauben befestigt werden, als auch für Griffe mit Gewindebohrungen oder Gewindeeinsätzen, in welche Schrauben mit metrischem Gewinde M4 oder M6 eingeschraubt werden. Die Form der Griffe gestattet es nicht immer, die auftretenden Dickenunterschiede der Frontplatten mit der Gewindetiefe bzw. der Länge des Gewindeeinsatzes im Griff aufzufangen. Mit anderen Worten: Es ist nicht möglich, das Gewinde im Griff so tief zu machen, daß eine einheitliche Schraubenlänge für alle Fälle genügt.

Aus diesem Grunde ist es schon bekannt, die Dickenunterschiede mit einer Hülsenmutter im Dickenbereich der Fontplatte aufzunehmen. Dieses bekannte Griffsystem besteht aus drei Teilen, nämlich dem Griff mit einer Gewindebohrung oder einem Gewindeeinsatz, einem Gewindebolzen und der erwähnten Hülsenmutter. Der Gewindebolzen hat an einem Ende einen Schraubenzieherschlitz und wird mit dem anderen Ende fest in den Griff eingeschraubt. Nach diesem ersten Montagevorgang, der beim Aufstellen der Möbelstücke ausgeführt wird, folgt ein zweiter Montagevorgang. Dieser besteht darin, den mit Gewindebolzen bestückten Griff in ein Loch der Platte zu stecken und dann von der anderen Seite her die Hülsenmutter einzuführen und mit dem Gewindestift zu verschrauben; siehe z.B. US-A- 2 095 397.

Der Erfindung liegt die Aufgabe zugrunde, diesen doppelten Montagevorgang zu vereinfachen und weniger Einzelteile zur Befestigung von Griffen diesen beipacken und zur Montage mitführen zu müssen.

Diese Aufgabe wird erfindungsgemäß durch die Verwendung einer Befestigungsvorrichtung gelöst, die sich dadurch auszeichnet, daß ein Gewindebolzen über die Länge von wenigen Gewindegängen in eine Hülsenmutter eingeschraubt und zugleich verklebt ist. Es kann die bekannte Hülsenmutter und der bekannte Gewindebolzen verwendet werden. Der Unterschied besteht darin, daß die zweiteilige Befestigungsvorrichtung infolge der Verklebung eine feste Gestalt hat und wie ein Teil zu handhaben ist. Der Laie wird diese Befestigungsvorrichtung einfach als Schraube auffassen und sie wird auch so verwendet, nämlich eingesteckt und, vorzugsweise mittels eines Elektroschraubers, mit dem Griff verschraubt.

Im einzelnen verläuft der Vorgang so: Der Gewindebolzen wird von der Hülsenmutter mittels der Verklebung angetrieben. Nach einigen Umdrehungen läuft der Gewindebolzen in oder an dem Griff auf Anschlag. In diesem Moment hat normalerweise der Kopf der Hülsenmutter noch einen Abstand von der Frontplatte. Durch das Auflaufen des Gewindebolzens erhöht sich schlagartig das Drehmoment. Infolgedessen bricht die Klebestelle los und die Hülsenmutter dreht sich um den undrehbar gewordenen Gewindebolzen und letzterer schraubt sich immer weiter in die Hülsenmutter ein. Schließlich kommt der Kopf der Hülsenmutter an der Innenseite der Frontplatte zur Anlage, so daß die Hülsenmutter angezogen werden kann und der Griff fest sitzt.

Um in jedem Falle einen definierten Anschlag des Gewindobolzens gegenüber dem Griff zu gewährleisten, wird ferner vorgeschlagen, daß der Gewindebolzen innerhalb seiner Gesamtlänge eine als Gewindeanschlag wirkende Verdickung aufweist, insbesondere einen umlaufenden Wulst, z. B. auf einem Viertel der Gesamtlänge des Gewindebolzens.

Es wird vorgeschlagen, zum Verkleben des Gewindebolzens in der Hülsenmutter einen Klebstoff zu wählen, der die Eigenschaft hat, bei erhöhtem Drehmoment loszubrechen und sodann ein weiteres Einschrauben des Gewindebolzens in die Hülsenmutter möglich zu machen. Durch eine geschickte Auswahl des Klebstoffs in dem Sinne, daß er eine gewisse Elastizität aufweist, kann zudem der Effekt einer Schraubensicherung erzielt werden.

Die Erfindung hat somit nicht nur den beträchtlichen Vorteil einer Verringerung der notwendigen Einzelteile und einer Vereinfachung der Griffmontage, sondern verbessert auch die Stabilität und Dauerhaftigkeit der Griffbefestigung.

Ein Ausführungsbeispiel der Erfindung wird nachstehend anhand von zwei Schnittdarstellungen kurz erläutert. Im einzelnen zeigt
- Fig. 1: die verwendeten Einzelteile vor dem Zusammenbau und
- Fig. 2: den Montageendzustand.

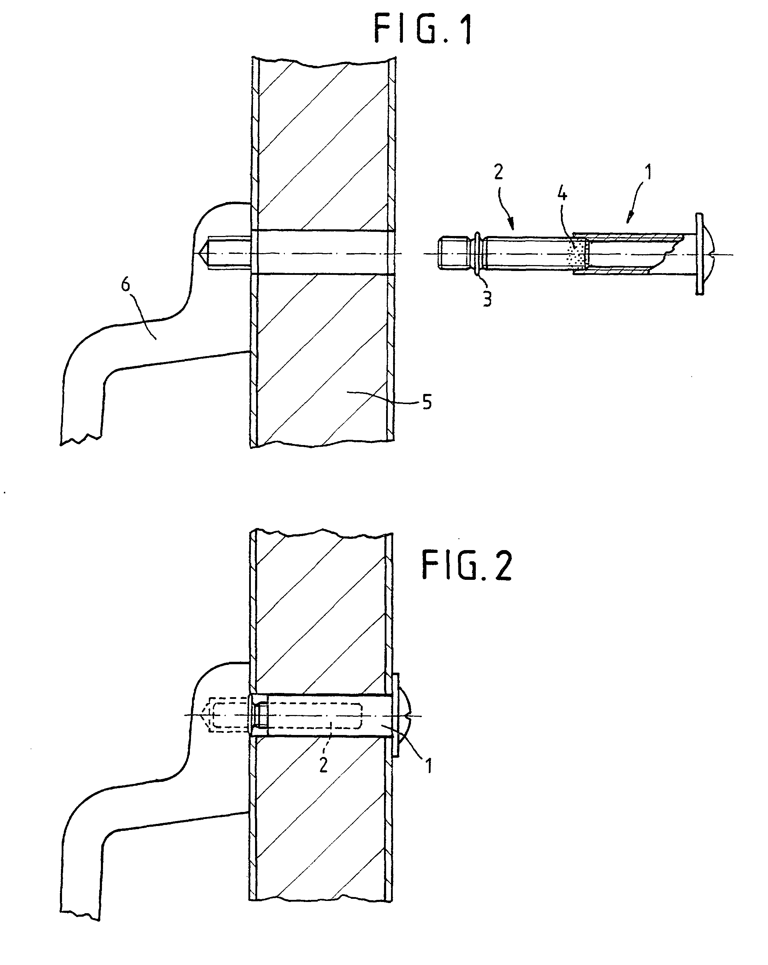

Eine als ein Teil handhabbare Befestigungsvorrichtung, die in Fig. 1 rechts dargestellt ist, besteht aus einer Hülsenmutter 1 und einem Gewindebolzen 2. Die Hülsenmutter 1 hat einen Scheibenrundkopf mit Kreuzschlitz. An dem Gewindebolzen ist links auf etwa einem Viertel seiner Gesamtlänge ein preßtechnisch gerundeter Bund 3 mit beidseitigen Gewindefreistichen angebracht. Der Gewindebolzen 2 ist etwa zwei Gewindegänge weit in die Hülsenmutter 1 eingeschraubt und mittels eines Klebers 4 darin festgeklebt. Der Kleberauftrag beschränkt sich im Wesentlichen auf diese wenigen anfänglichen Gewindegänge. Er kann vor dem Einschrauben als Tropfen oder durch ein anderes geeignetes Beschichtungsverfahren aufgebracht werden. Fig. 1 zeigt weiter eine Frontwand 5 mit einer durchgehenden Bohrung, deren Durchmesser etwa dem Außendurchmesser der Hülsenmutter 1 entspricht. An die Frontwand ist ein bügelförmiger Griff 6 angelegt, der nur teilweise gezeigt ist. Die Auswahl dieses Griffes 6, der auch ein Knopf oder dergleichen sein könnte, soll einen Fall demonstrieren, in welchem die Gewindebohrung des Griffes aufgrund von dessen Form nur eine geringe Tiefe haben kann.

Die Montage erfolgt in der Weise, daß die Befestigungsvorrichtung wie eine Schraube verwendet wird. Man steckt sie in die Bohrung und schraubt den Griff 6 fest. Zunächst schraubt sich dabei das vordere Ende des Gewindebolzens 2 in die Gewindebohrung des Griffs 6 ein, bis der Bund 3 am Griff zur Anlage kommt. Beim Weiterschrauben reißt sich dann die Hülsenmutter 1 los und dreht sich um den dann feststehenden Gewindebolzen 2, bis der Kopf der Hülsenmutter 1 an der Frontwand 5 zur Anlage kommt.

## Patentansprüche

1. Befestigungsvorrichtung für Möbelgriffe und dergleichen unter Verwendung einer Hülsenmutter und eines Gewindebolzens, **dadurch gekennzeichnet, daß** der Gewindebolzen (2) über die Länge von wenigen Gewindegängen in die Hülsenmutter (1) eingeschraubt und zugleich verklebt (4) ist.

2. Befestigungsvorrichtung nach Anspruch 1, **dadurch gekennzeichnet, daß** der Gewindebolzen (2) innerhalb seiner Gesamtlänge eine als Gewindeanschlag wirkende Verdickung (3) aufweist.

3. Befestigungsvorrichtung nach Anspruch 1, **dadurch gekennzeichnet, daß** zum Verkleben des Gewindebolzens (2) ein Klebstoff (4) Verwendung findet, der bei erhöhtem Drehmoment losbricht und dann ein weiteres Einschrauben des Gewindebolzens (2) in die Hülsenmutter (1) ermöglicht.

## Claims

1. Device for fastening a handle or the like to a piece of furniture by using a sleeve nut and a threaded bolt, **characterised in that** the threaded bolt (2) is screwed into the sleeve nut (1) over the length of a few threads and is simultaneously glued (4).

2. Fastening device according to claim 1, **characterised in that** within its overall length the threaded bolt (2) has a thickening (3) acting as a thread stop.

3. Fastening device according to claim 1, **characterised in that** an adhesive (4) which breaks off in the event of an increased torque and then allows further screwing of the threaded bolt (2) into the sleeve nut (1) is used for gluing the threaded bolt (2).

## Revendications

1. Dispositif de fixation de poignée de meuble ou produits analogues utilisant un écrou en forme de douille et une tige filetée,
**caractérisé en ce que**
la tige filetée (2) est vissée et en même temps collée (4) sur la longueur d'au moins quelques pas de vis dans l'écrou en forme de douille (1).

2. Dispositif de fixation selon la revendication 1,
**caractérisé en ce que**
la tige filetée (2) comporte, à l'intérieur de sa longueur totale, un renforcement (3) fonctionnant comme butée de filetage.

3. Dispositif de fixation selon la revendication 1,
**caractérisé en ce que**
pour coller la tige filetée (2) on utilise une colle (4) qui se casse lorsqu'elle est exposée à un couple élevé et permet alors la poursuite du vissage de la tige filetée (2) dans l'écrou en forme de douille (1).
